# EUROPEAN PATENT SPECIFICATION

(11) **EP 0 356 404 B1**
(45) Date of publication and mention of the grant of the patent: **07.01.1993**
(21) Application number: 89830352.4
(22) Date of filing: 26.07.1989
(51) Int. Cl.: F16K 11/00

(54) **Locking device to fit a mixing valve for hot and cold water into the body of a tap**
Festklemmeinrichtung zum Fixieren eines Mischventils für warmes und kaltes Wasser innerhalb des Ventilgehäuses
Dispositif pour fixer une soupape de mélange pour eau chaude et froide dans un corps de robinet

(30) Priority: 22.08.1988 IT 705888 U
(43) Date of publication of application: 28.02.1990
(73) Proprietor: GALATRON S.r.l., I-46043 Castiglione d/Stiviere (Mantova) (IT)
(72) Inventor: Orlandi, Alessio, I-46043 Castiglione D/Stiviere (Mantova) (IT)
(74) Representative: Manzoni, Alessandro

(56) References cited:
- WO-A-88/09894
- US-A- 3 167 086
- US-A- 3 667 503
- US-A- 4 325 403
- US-A- 4 469 123

## Description

The present invention relates to mixing valves for hot and cold water and more particularly to a locking device to fix a mixing valve inside the body of a water tap.

In the matter of mixing valves various embodiments are known. One of these, for example, is disclosed in US-A-4,325,403 wherein;
- the valve is of the type comprising a cartridge type body with bottom and cover enclosing two overlapping disks one of which is fixed while the other one is movable on said fixed disk;
- the fixed disk has two openings to let in the hot and cold water delivered by two inlet pipes and one outlet opening to deliver the mixed water to a spout of the tap;
- the movable disk is displaced and adjusted by a control lever and comprising a mixing chamber to be suitably moved in respect to said fixed disk;
- said mixing valve is placed into a seat of the tap body and therein fixed by means of a locking nut acting on the cover of the cartridge type body of the valve;
- the body of said tap comprises inlet pipes for hot and cold water and an outlet for the delivery of the mixed water coming from the valve.

However, the locking nut is screwed on top of the tap and directly leaning on the cover of the cartridge. Such an assembly has the disadvantage that locking nut acts as a rather rigid locking means as it is unable to suit eventual working errors or defects of the tap body, especially those concerning the depth of its seat for the valve. Owing to this peculiarity the kind of locking it achieves may be either too tight or too loose or even insufficient and thus jeopardize the correct operation of the mixing valve. In fact, it cannot be excluded that the nut bears on the top of the body of the tap and gets locked without suitably blocking the cartridge if the seat inside the tap is too deep or, on the contrary, that the nut lock the cartridge too tightly to the bottom of the seat owing to its insufficient depth. In the first case the cartridge might get loose inside the tap, while in the second case it might not be able to operate correctly.

In US-A-3,167,086 and US-A-4,469,123 other types of valves are disclosed wherein a pressure sealing ring assembly is provided, but it is arranged inside the valve, usually on the sealing member, and not outside to act on the valve body.

It is therefore the purpose of the present invention to provide a remedy to the above mentioned disadvantages and to propose a locking device allowing a safe assemblage of mixing valves even if it is fixed into the seat available inside a tap which is not free from working faults.

To this purpose, the present invention relates a locking device according to the preamble of claim 1 as is e.g. known from US-A-4325403 and characterized in that between the locking nut and the cover of the cartridge body an elastic assembly is fitted to compensate plays and to regularly distribute the locking load bearing on the cartridge while the locking nut is screwed on the body of the tap, and said elastic assembly comprises an elastic member onto which the locking nut rests, a washer provided between said elastic member and the cover of the cartridge body, and a sealing ring associated to said elastic member and/or washer.

Said elastic member is preferably represented by at least one Belleville spring washer. Such an elastic assembly has the advantage that the elastic member rests on the cartridge cover through an interposed washer which is designed to distribute the load on said cartridge cover, while sealing ring which may be made of rubber or any other suitable elastomeric material, provides a radial adjustment of the valve cartridge.

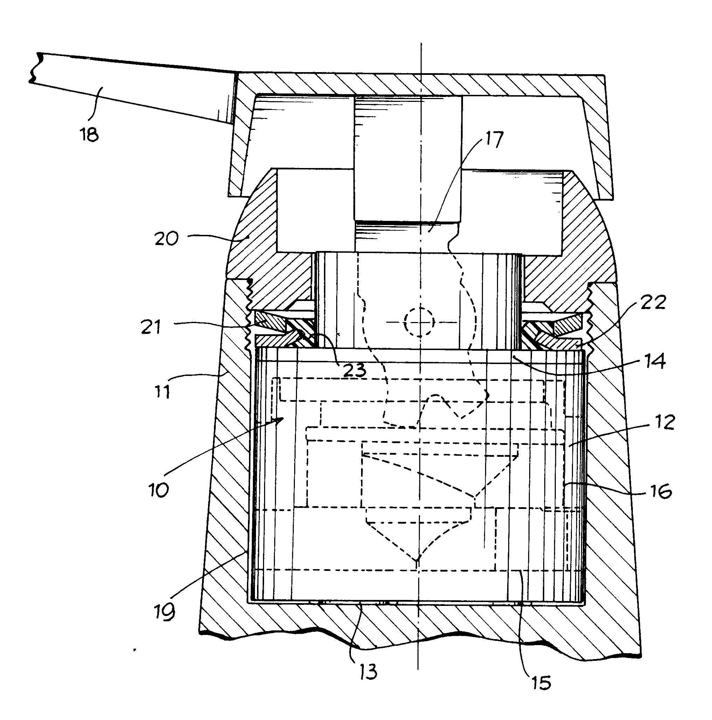

An example of embodiment of the invention will now be described with reference to the accompanying drawing where the only figure shows a sectional view of a mixing valve fixed into the body of a water tap.

In said drawing, by reference number (10) a mixing valve is indicated, said valve being fitted into the body (11) of a water tap and comprising a cartridge type body (12), a bottom (13) and a top or cover (14) enclosing to overlapping disks (15, 16), one of which is fixed while the other one is moved and adjusted by means of a control lever (17) fitted with a handle (18) in a known way.

Inside the body (11) of the tap a seat (19) is available to receive the mixing valve (10). The hot and cold water entering through its inlet pipes flows through the valve to be delivered through the spout of the tap.

As the operation of the mixing valve is well known it does not need a detailed description. Fitted into said seat (19) of the tap it is fixed by means of a locking nut (20) screwed on the top of the tap body (11) and acting on the valve cartridge to fasten it to the bottom of said seat after placing some seals on cover 14 of the valve cartridge.

Now, according to the invention, between the locking nut (20) and the cartridge body (12) at least one elastic element, e.g. a Belleville washer spring (21), is fitted in order to transmit and adjust the locking load to the cartridge and at the same time compensate any eventual play or tolerance, even if the locking nut is tightly closing on the body of the tap.

In addition, between said Belleville washer spring (21) and the cover (14) of cartridge body (12) a washer (22) is assembled for a more even distribution of the locking load on the whole surface of cover (14) thus achieving the advantages as aimed at. Finally, a sealing ring (23) made of rubber or other elastic material, is associated to said washer and/or Belleville spring for a radial adjustment of the valve cartridge.

## Claims

1. A locking device to fix a mixing valve (10) for hot and cold water inside the body (11) of a tap,
- said valve (10) being of the type comprising a cartridge type body (12) with bottom (13) grand cover (14) enclosing two overlapping disks (15,16) one of which is fixed, the other one is movable on said fixed disk;
- the fixed disk (15) having two openings to let in the hot and cold water delivered by two inlet pipes and one outlet opening to deliver the mixed water to a spout of the tap;
- the movable disk (16) being displaced and adjusted by a control lever (17) and comprising a mixing chamber to be suitably moved in respect to said fixed disk (15);
- said mixing valve (10) being placed into a seat (19) of the tap body (11) and therein fixed by means of a locking nut (20) acting on the cover (14) of the cartridge type body (12) of the valve (10);
- the body (11) of said tap comprising inlet pipes for hot and cold water and an outlet for the delivery of the mixed water coming from the valve,
characterized in that:
- between the locking nut (20) and the cover (14) of said cartridge body (12) an elastic assembly (21,22,23) is fitted to compensate plays and to regularly distribute the locking load bearing on the cartridge body (12) when the locking nut (20) is screwed on the body (11) of the tap, and
- said elastic assembly comprises an elastic member (21) onto which the locking nut (20) rests, a washer (22) provided between said elastic member (21) and the cover (14) of said cartridge body (12), and a sealing ring (23) associated to said elastic member (21) and/or washer (22).

2. Device as claimed in claim 1, characterized in that said elastic member (21) is represented by at least one Belleville spring washer, and said sealing ring (23) is made of rubber or a similar elastic material.

## Patentansprüche

1. Ein Schliessgeraet zur Befestigung eines Mixer-Ventils (10) fuer warmes und kaltes Wasser in dem Koerper (11) eines Hahnes,
- obengennantes Ventil (10) besteht aus einem Patrone-Koerper (12) mit Boden (12) und Deckel (14) und aus zwei ueberschneidende Scheiben (15, 16), von deren die eine befestigt ist, und die andere ueber besagte befestigte Scheibe beweglich ist;
- die befestigste Scheibe (15) hat zwei Oeffnungen zum Einfliessen des kalten und warmen Wassers, das durch zwei Zuflussrohren gegossen wird und eine Ausflussoeffnung zum Fliessen des gemischten Wassers in eine Abflussrohr des Hahns;
- die bewegliche Scheibe (16) wird von einem Betaetigungshebel (17) verschieben und reguliert, und sie hat eine Mixerkammer, damit sie passend bewegt werden kann, hinsichtlich der besagten befestigsten Scheibe (15);
- besagte Mixerventils (10) ist in einem Sitz des Hahneskoerpers (11) gebaut, und es wird darin durch eine Scliessschraubenmutter (20) befestigt, die ueber den Deckel (14) des Ventils- (10) Patronekoerpers (12) wirkt;
- der Koerper (11) des besagten Hahns schliesst Zuflussrohre fuer kaltes und warmes Wasser und eine Aussflussoeffnung zum Einfliessen des aus dem Ventil fliessenden gemischten Wasser ein, davon gekennzeichnet:
- zwiscen der Schliessschraubenmutter (20) und dem Deckel (14) des besagten Patronekoerpers (12) ist eine elestische Montage (21, 22, 23) fuer die Spiel-Entschaedigung und fuer die regelmaessige Verteilung der befestigenden Last, die ueber die Patronekoerper (12) drueckt, wenn die Schliessschraubenmuter (20) ueber den Hahneskoerper (11) verschraubt ist, und
- besagte elestische Montage scliesst einen elastischen Teil (21) ein, ueber dem die Schliessschraubenmutter (20) liegt, einen Dichtungsring (22) zwischen besagtem elastischem Teil (21) und dem Deckel (14) des besagten Patronekoerper (12), und einen versiegelnden Ring (23) mit besagtem elastischem Teil (21) und/oder Dichtungsring (22) verbunden.

2. Geraet wie im Anspruch 1 beansprucht, gekennzeichnet in dem besagte elastisce Teil (21) wenigstens von einem Belleville Federdichtungsring dargestellt wird, und besagte versiegelnde Ring (23) aus Gummi oder aenlichem elastischem Stoff besteht.

## Revendications

1. Un dispositif de blocage pour fixer un mélangeur (10) d'eau chaude et froide à l'intérieur du corps (11) d'un robinet,
- ledit mélangeur (10) étant du type comportant un corps en fotme de cartouche (12) avec un bout (13) et un couvercle (14) refermant deux disques superposés (15,16) dont l'un est fixé, l'autre est mobile sur ledit disque fixé;
- le disque fixé (15) présentant deux ouvertures pour faire entrer l'eau chaude et froide fournie par deux tuyaux d'entrée et une ouverture de sortie pour fournir l'eau mélangée à un bouche du robinet;
- le disque mobile (16) étant deplaçable et réglable par un levier de controle (17) et comprenant une chambre de mélange destinéè à etre convenablement mue par rapport au dit disque fixé (15) ;
- ledit mélangeur (10) se trouvant dans logement (19) du corps du robinet (11) et dans lequel il est fixé par un écrou de blocage (20) qui agit sur ler couvercle (14) du corps en forme de cartouche (12) du mélangeur (10);
- le corps (11) du dit robinet comportant des tuyaux d'entrée pour l'eau chaude et froid et une sortie pour fournir leau mélangée provenente du mélangeur,
caractérizé en ce que:
- entre l'écrou de blocage (20) et le couvercle (14) du dit robinet comportant des tuyanx d'entrée pour l'eau chaude et froide et une sortie pour fournir l'eau mélangée provenante du mélangeur, caratectérizé en ce que:
- entre l'écrou de blocage (20) et le couvercle (14) du dit corps en forme de cartouche (12) une structure élastique(21, 22, 23) est insérée pour compenser le jeu et repartir la charge de blocage appuyée sur le corps de cartouche (12) alors que l'écrou de blocage (2) est vissé sur le corps (11) du robinet, et ladite structure élastique comporte une partie élastique (21) sur laquelle l'écrou de blocage (20) est assurée, une rondelle (22) placée entre ladit partie élastique (21) et la couverture (14) du dit corps en forme de cartouche (12), et un joint (23) associée au dite partie élastique (21) et/ou à la rondelle (22).

2. Dispositif selon la rivendication 1, caractérisé en ce que ladit partie élastique (21) est représenté par au moins un ressort et rondelle de belleville, et que ledit joint (23) est en caoutchouc ou un matérial elastique similaire.
